# EUROPEAN PATENT APPLICATION

(11) **EP 4 539 139 A1**
(43) Date of publication of application: **16.04.2025**
(21) Application number: 24196927.8
(22) Date of filing: 28.08.2024
(51) Int. Cl.: H01M 4/133, H01G 11/24, C01B 32/20, H01G 11/42, H01M 4/587, H01M 4/02, H01M 10/0525, H01M 4/58

(54) **NEGATIVE ACTIVE MATERIAL, NEGATIVE ELECTRODE, AND ENERGY STORAGE DEVICE**

(30) Priority: 18.09.2023 CN 202311203178
(71) Applicant: Xiamen Hithium Energy Storage Technology Co., Ltd., Xiamen, Fujian 361100 (CN)
(72) Inventor: PENG, Fuxi, Xiamen, Fujian, 361100 (CN); ZHANG, Qin, Xiamen, Fujian, 361100 (CN)
(74) Representative: Viering, Jentschura & Partner mbB Patent- und Rechtsanwälte

(57) **Abstract**

A negative active material includes a porous structure having micropores, mesopores, and macropores, where a pore volume of the negative active material satisfies: 0.5% ≤ *V*1 / *V*2 ≤ 2% and 30% ≤ *V*2 / (*V*2 + *V*3) ≤ 50%, where *V*1 represents a pore volume of the micropores in the negative active material, *V*2 represents a pore volume of the mesopores in the negative active material, and *V*3 represents a pore volume of the macropores in the negative active material.

## Description

### TECHNICAL FIELD

The disclosure relates to the field of battery technologies, and in particular, to a negative active material, a negative electrode piece, and an energy storage device.

### BACKGROUND

With the explosive growth of the energy storage market, the market demands for the service life of energy storage devices are increasing. Although there are currently some methods for prolonging the service life of the energy storage device, they often easily affect the capacity performance of the energy storage device while prolonging its service life, making it difficult to balance the overall performance indicators of the energy storage device during use.

### SUMMARY

In a first aspect, a negative active material is provided in the disclosure. The negative active material includes a porous structure having micropores, mesopores, and macropores, where a pore volume of the negative active material satisfies: 0.5% ≤ *V*1 / *V*2 ≤ 2% and 30% ≤ *V2* / (*V2* + *V*3) ≤ 50%, where *V*1 represents a pore volume of the micropores in the negative active material, *V*2 represents a pore volume of the mesopores in the negative active material, and *V*3 represents a pore volume of the macropores in the negative active material.

In a second aspect, a negative electrode is provided in the disclosure. The negative electrode includes a current collector and an active material layer disposed on at least one surface of the current collector, where the active material layer includes the negative active material provided in the first aspect.

In a third aspect, an energy storage device is provided. The energy storage device includes the negative active material provided in the first aspect. Alternatively, the energy storage device includes the negative electrode provided in the second aspect.

### BRIEF DESCRIPTION OF THE DRAWINGS

To describe technical solutions in embodiments of the disclosure more clearly, the following briefly introduces the accompanying drawings required for describing the embodiments. Apparently, the accompanying drawings in the following description only illustrate some embodiments of the disclosure. Those of ordinary skill in the art may also obtain other drawings based on these accompanying drawings without creative efforts.

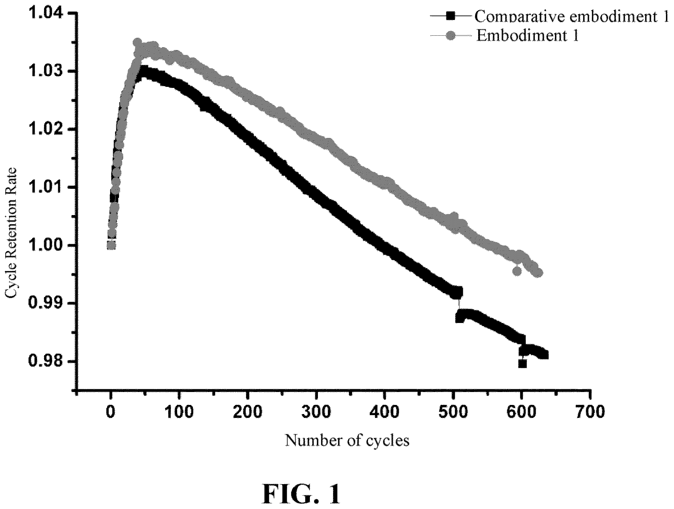

FIG. 1 is a cyclic performance test chart of a negative electrode according to a first embodiment and a first comparative embodiment of the disclosure.

### DETAILED DESCRIPTION

A negative active material includes a porous structure having micropores, mesopores, and macropores, where a pore volume of the negative active material satisfies: 0.5% ≤ *V*1 / *V*2 ≤ 2% and 30% ≤ *V*2 / (*V*2 + *V*3) ≤ 50%, where *V*1 represents a pore volume of the micropores in the negative active material, *V*2 represents a pore volume of the mesopores in the negative active material, and *V*3 represents a pore volume of the macropores in the negative active material.

In an implementation, a ratio of *V*2 / (*V*2 + *V*3) to (Dv99 - *Dv90)* / Dv99 ranges from 0.8 to 1.5, where Dv99 represents a particle size corresponding to a cumulative particle size distribution of the negative active material that reaches 99%, and Dv90 represents a particle size corresponding to a cumulative particle size distribution of the negative active material that reaches 90%.

It may be noted that, in embodiments of the disclosure, the cumulative particle size distribution refers to a cumulative volume fraction in volume-weighted distribution.

In an implementation, 0.34 ≤ (*Dv*99 - *Dv*90) / Dv99 ≤ 0.36.

In an implementation, 20 µm ≤ *Dv*90 ≤ 30 µm, and 30 µm ≤ *Dv*99 ≤ 40 µm.

In an implementation, 0.5% ≤ *V*1 / *V*2 ≤ 0.6%.

In an implementation, 46% ≤ *V*2 / (*V*2 + *V*3) ≤ 48%.

In an implementation, 0.00001 cm³/g < *V*1 ≤ 0.00004 cm³/g, 0.001 cm³/g < *V*2 ≤ 0.0025 cm³/g, and 0.0026 cm³/g ≤ *V*3 ≤ 0.004 cm³/g.

In an implementation, a ratio of a quantity of the negative active material in a first particle size range to a total quantity of the negative active material is *x,* a ratio of a quantity of the negative active material in a second particle size range to the total quantity of the negative active material is *y*, a ratio of a quantity of the negative active material in a third particle size range to the total quantity of the negative active material is z, particle sizes of the negative active material satisfy: 8.4 ≤ *x* / *z* ≤ 25.0 and 2.8 ≤ *y* / *z* ≤ 11.7; the first particle size range is a range with a lower limit greater than or equal to 0.6 µm and with an upper limit less than or equal to 2.5 µm; the second particle size range is a range with a lower limit greater than 2.5 µm and with an upper limit less than 7.5 µm; and the third particle size range is a range with a lower limit greater than or equal to 7.5 µm and with an upper limit less than or equal to 30 µm.

In an implementation, 0.59 ≤ *x* ≤ 0.75, 0.20 ≤ *y* ≤ 0.35, and 0.03 ≤ *z* ≤ 0.07.

In an implementation, a specific surface area of the negative active material ranges from 1.1 m²/g to 2.0 m²/g.

The technical solutions in the embodiments of the disclosure are clearly and completely described in the following with reference to the accompanying drawings in the embodiments of the disclosure. Apparently, the described embodiments are merely part of rather than all the embodiments of the disclosure. All other embodiments obtained by those of ordinary skill in the art based on the embodiments of the disclosure without creative efforts are within the scope of the disclosure.

In the disclosure, terms such as "upper", "lower", "left", "right", "front", "rear", "top", "bottom", "inner", "outer", "middle", "vertical", "horizontal", "lateral", and "longitudinal" indicate orientations or positional relationships based on the orientations or positional relationships illustrated in accompanying drawings. These terms are primarily intended to better describe the disclosure and the embodiments thereof, rather than indicate that devices, elements, or components referred to herein must have a certain direction or be configured or operated in a certain direction.

Furthermore, in addition to indicating orientations or positional relationships, some of the above terms may also be used to express other meanings. For example, the term "upper" may, in some cases, be used to indicate a certain attachment or connection relationship. Those skilled in the art can understand the specific meanings of these terms in the context of the disclosure based on the specific circumstances.

In addition, in the disclosure, terms such as "mounting", "disposing", "providing", "coupling", and "connecting" should be understood in broader sense. For example, coupling may be a fixed coupling, a removable coupling, or an integrated coupling, may be a mechanical coupling, an electrical coupling, and may be a direct coupling, an indirect coupling through a medium, or an internal connection between two devices, elements, and components. For those of ordinary skill in the art, the above terms in the disclosure can be understood according to specific situations.

In addition, the terms such as "first" and "second" are merely used to distinguish between different devices, elements, or components (specific types and configurations may be the same or different), and are not intended to indicate or imply relative importance and quantity of the indicated devices, elements, or components. Unless otherwise specified, the terms "a plurality of" and "multiple" mean that that the number is two or more.

The technical solutions of the disclosure will be further described below with reference to the embodiments and accompanying drawings.

To solve the above technical problems, the disclosure discloses a negative active material, a negative electrode, and an energy storage device. By optimizing and controlling the negative active material of the negative electrode, the service life of the energy storage device is prolonged, while the stability and rate performance of the energy storage device are simultaneously enhanced. Compared with the related art, the beneficial effects of the disclosure are as follows.

Based on extensive research, the disclosure has found that when pore volumes of various types of pores of the negative active material satisfies 0.5% ≤ *V*1 / *V*2 ≤ 2 % and 30% ≤ *V*2 / (*V*2 + *V*3) ≤ 50%, on the one hand, pores and pore volume proportions of the micropores, the mesopores, and the macropores are more beneficial to improving abundant lithium-ion channels without consuming too much lithium source during a formation of the solid electrolyte interphase (SEI) film caused by an excessive increase in the specific surface area; on the other hand, a particle size ratio of the micropores and the mesopores is beneficial to providing good kinetic performance and reducing side reactions. Thus, by controlling the pore volumes and pore size distributions of the micropores, the mesopores, and the macropores, the cycle performance and rate performance of the negative electrode using the negative active material can be improved.

The embodiments of the disclosure provide a negative active material, a negative electrode, and an energy storage device to further prolong the service life of the energy storage device while ensuring a relatively high level of capacity performance of the energy storage device.

According to a first aspect, the embodiments of the disclosure provide a negative active material. The negative active material includes a porous structure having micropores, mesopores and macropores. A pore volume of the negative active material satisfies the following relationships: 0.5% ≤ *V*1 / *V*2 ≤ 2% and 30% ≤ (*V*2 + *V*3) ≤ 50%, where *V*1 represents a pore volume of the micropores in the negative active material, *V*2 represents a pore volume of the mesopores in the negative active material, and *V*3 represents a pore volume of the macropores in the negative active material.

The negative active material in the embodiments of the disclosure has a porous structure with micropores, mesopores, and macropores simultaneously, which may be, for example, a graphite material with micropores, mesopores, and macropores simultaneously. The micropores refer to pores with diameters less than 2 nm, the mesopores refer to pores with diameters greater than or equal to 2 nm and less than or equal to 50 nm, and the macropores refer to pores with diameters greater than 50 nm and less than 500 nm. It may be understood that 0.5% ≤ *V*1 / *V*2 ≤ 2% includes any point value within this range, such as *V*1 / *V*2 being 0.5, 0.8, 1, 1.2, 1.5, 1.8, or 2. 30% ≤ *V2* / (*V*2 + *V*3) ≤ 50% includes any point value within this range, such as *V2* / (*V*2 + *V*3) being 30%, 32%, 35%, 38%, 40%, 42%, 45%, 47%, or 50%.

These pores with different pore volumes in the negative active material, on the one hand, can provide corresponding channels for insertion and extraction of lithium ions, but on the other hand, they will also consume more lithium sources during a formation of the solid electrolyte interphase (SEI) film. Therefore, neither larger pore diameters nor larger pore volumes are better. Instead, the pore volumes of the micropores, the mesopores, and the macropores need to be optimally controlled to ensure that the negative electrode using the negative active material has desired cycle performance and rate performance, thereby enabling the energy storage device using the negative electrode to have a longer service life and better capacity performance.

Based on extensive research, the disclosure has found that in the case where 0.5% ≤ *V*1 / *V*2 ≤ 2% and 30% ≤ *V*2 / (*V*2 + *V*3) ≤ 50%, the pores and pore volume proportions of the micropores, the mesopores, and the macropores are more beneficial to improving abundant lithium-ion channels without consuming too much lithium source during the formation of the solid electrolyte interphase (SEI) film caused by an excessive increase in the specific surface area. Thus, by controlling the pore volumes of the micropores, the mesopores, and the macropores, the cycle performance and rate performance of the negative electrode using the negative active material can be improved.

In the case where *V*1 / *V*2 is less than 0.5% and *V2* / (*V*2 + *V*3) is less than 30%, the pores in the total negative active material decrease, and the pore structure of the negative active material is characterized by a predominance of macropores. Although more macropores may reduce the lithium source consumption, this reduces the channels for insertion and extraction of lithium ions, weakens the kinetic performance and increases the internal resistance, thus significantly impacting the cycle life of the negative electrode. In the case where *V*1 / *V*2 is greater than 2% and *V2* / (*V*2 + *V*3) is greater than 50%, the pore structure of the negative active material is characterized by more mesopores and micropores, with a significantly reduced amount of macropores. However, this leads to a considerable increase in the specific surface area of the negative active material, thereby increasing lithium source consumption during the formation of the SEI film formation, affecting the initial Coulombic efficiency (ICE) of the energy storage device, and consequently impacting the cycle life of the energy storage device.

Further, a ratio of *V*2 / (*V*2 + *V*3) to (*Dv*99 - *Dv*90*)* / *Dv*99 ranges from 0.8 to 1.5. That is, 0.8 ≤ [*V*2 / (*V*2 + *V*3)] / [(*Dv*99 - *Dv*90) / *Dv*99] ≤ 1.5. The range, from 0.8 to 1.5, of the ratio of a pore volume ratio of the mesopores and the macropores and a particle size ratio of the negative active material includes any specific point value within this range, such as [*V*2 / (*V*2 + *V*3)] / [(*Dv*99 - *Dv*90) / *Dv*99] being 0.8, 0.9, 1, 1.1, 1.2, 1.3, 1.4, or 1.5.

Based on the control of the pore volumes of the micropores, the mesopores, and the macropores within the aforementioned range, further controlling the ratio of the pore volumes of the mesopores and the macropores to the particle size of the negative active material within the above range, the particle size distributions and pore volume characteristics of the negative active material can provide suitable lithium-ion channels and specific surface area for lithium source consumption, thereby further promoting the balance between the cycle performance and capacity level of the energy storage device. In the case where the ratio is lower than 0.8, the negative active material has more large particles in the particle size distributions, and the porous structure is mainly macropores, which reduces the lithium-ion channels and weakens the kinetic performance. In the case where the ratio is higher than 1.5, the negative active material has fewer large particles in the particle size distributions, and the porous structure is mainly mesopores, which significantly increases the specific surface area of the negative active material, leading to more lithium source consumption during the formation of the SEI film, thus affecting the ICE and the cycle performance of the energy storage device.

Further explanations of the pore volumes of various types of pores and the particle size distributions of the negative active material are provided below.

Furthermore, 0.5% ≤ *V*1 / *V*2 ≤ 0.6%, 46% ≤ *V2* / (*V*2 + *V*3) ≤ 50%, 0.34 ≤ (*Dv*99 - *Dv90)* / *Dv*99 ≤ 0.36.

By further controlling the ratio of the pore volume of the micropores to the pore volume of the mesopores to be between 0.5% and 0.6%, a proportion of the pore volume of the mesopores in the total pore volume of the mesopores and the macropores to be between 46% and 48%, and 0.34 ≤ (Dv99 - *Dv*90) / *Dv*99 ≤ 0.36, the proportions of the pore volumes of the mesopores, the micropores, and the macropores in the negative active material, as well as the particle size distributions of the negative active material, can better balance the infiltration reaction channels provided for lithium ions and the lithium source consumption during the formation of the SEI film, ensuring that the energy storage device maintains a capacity retention rate of over 99.7% after 600 cycles, without significant attenuation in the specific capacity of the energy storage device.

Furthermore, 0.00001 cm³/g < *V*1 ≤ 0.00004 cm³/g, 0.001 cm³/g < *V2* ≤ 0.0025 cm³/g, 0.0026 cm³/g < *V3* ≤ 0.004 cm³/g. In the case where the pore volumes of the micropores, the mesopores, and the macropores of the negative active material in the embodiments of the disclosure are set within the above ranges, respectively, it is more beneficial to achieving the pore volume structure characteristics under the conditions of 0.5% ≤ *V*1/ *V2* ≤ 0.6% and 46% ≤ *V2* / (*V*2 + *V*3) ≤ 50%, thereby facilitating the rapid screening of the porous structure of these pore volumes to optimize the electrochemical performance of the negative active material, and further optimizing the cycle performance and capacity level of the energy storage device.

Furthermore, 20 µm ≤ *Dv*90 ≤ 30 µm, and 30 µm ≤ *Dv*99 ≤ 40µm. In the case where the particle size distributions, corresponding to *Dv*99 and *Dv*90, of the negative active material in the embodiments of the disclosure are limited to the above ranges, it is more beneficial to achieving the particle size structure characteristics under the conditions of 0.34 ≤ (*Dv*99 - *Dv*90) / *Dv*99 ≤ 0.36. It facilitates the rapid screening of a specified particle size of negative active material to optimize the electrochemical performance of the negative active material, and further optimizing the cycle performance and capacity level of the energy storage device.

In addition to controlling proportions of pore volumes of different types of micropores, mesopores, and macropores, the disclosure finds that further controlling the particle size distributions of the negative active material to be within specific ranges can further ensure that the negative active material has fewer side reactions, stronger kinetic performance, and higher compaction density. Specifically, a ratio of a quantity of the negative active material in a first particle size range to a total quantity of the negative active material is x, a ratio of a quantity of the negative active material in a second particle size range to the total quantity of the negative active material is *y*, a ratio of a quantity of the negative active material in a third particle size range to the total quantity of the negative active material is z, particle sizes of the negative active material satisfy: 8.4 ≤ x / *z* ≤ 25.0 and 2.8 ≤ *y* / *z* ≤ 11.7. The first particle size range is a range with a lower limit greater than or equal to 0.6 µm and with an upper limit less than or equal to 2.5 µm. The second particle size range is a range with a lower limit greater than 2.5 µm and with an upper limit less than 7.5 µm. The third particle size range is a range with a lower limit greater than or equal to 7.5 µm and with an upper limit less than or equal to 30 µm.

In the case where *x* / *z* is greater than 25.0 *ory* / *z* is less than 2.8, the particle size of the negative active material is small, and the specific surface area is large, which easily causes side reactions in the negative active material. In the case where *x* / *z* is less than 25.0 *ory* / *z* is greater than 2.8, it easily affects the kinetic performance of the negative active material, leading to lithium plating. Therefore, on the basis of the negative active material already having specific pore volume distributions of micropores, mesopores, and macropores, further controlling the particle size distributions of the negative active material within the above ranges is beneficial for achieving a more suitable level of lithium source consumption, further improving kinetic performance, and reducing side reactions.

Exemplarily, *x* / *z* may be 8.4, 9.0, 9.5, 10.0, 10.5, 11.0, 12.0, 15.0, 18.0, 20.0, 21.0, 22.0, 24.0, or 25.0. Exemplarily, *y* / *z* may be 2.8, 3.0, 3.5, 4.0, 4.5, 5.0, 5.5, 6.0, 6.5, 7.0, 7.5, 8.0, 8.5, 9.0, 9.5, 10.0, 10.5, 11.0, 11.5, or 11.7.

Furthermore, 0.59 ≤ *x* ≤ 0.75, 0.20 ≤ *y* ≤ 0.35, and 0.03 ≤ *z* ≤ 0.07. In the case where the negative active material in the embodiments of the disclosure limits x, *y,* and z within the above ranges, it is more advantageous for the particle size distributions of micropores and mesopores to satisfy 8.4 ≤ x / *z* ≤ 25.0, 2.8 *< y* / *z* ≤ 11.7. This facilitates the rapid screening of these specified particle sizes of negative active material to optimize the electrochemical performance of the negative active material, thereby enhancing the cycle performance and capacity level of the energy storage device. Exemplarily, x may be 0.59, 0.60, 0.62, 0.65, 0.67, 0.70, 0.72, or 0.75; *y* may be 0.20, 0.22, 0.25, 0.28, 0.30, 0.32, or 0.35; and z may be 0.03, 0.04, 0.05, 0.065, or 0.07.

Furthermore, a specific surface area of the negative active material ranges from 1.1 m²/g to 2.0 m²/g. The specific surface area of the negative active material may be any value within this range, such as 1.1 m²/g, 1.2 m²/g, 1.3 m²/g, 1.4 m²/g, 1.45 m²/g, 1.6 m²/g, 1.65 m²/g, 1.7 m²/g, 1.72 m²/g, 1.75 m²/g, 1.8 m²/g, 1.90 m²/g, or 2.0 m²/g.

In a second aspect, the embodiments of the disclosure provide a negative electrode, which includes a current collector and an active material layer disposed on at least one surface of the current collector. The active material layer includes the negative active material provided in the first aspect.

In the embodiments of the disclosure, the current collector may be a copper foil current collector. The active material layer can be arranged on one or both sides of the current collector to participate in the electrochemical reaction. Additionally, the active material layer may include the negative active material provided in the first aspect and functional additives such as binders and conductive agents.

In a third aspect, the embodiments of the disclosure provide an energy storage device, which includes the negative active material provided in the first aspect. The energy storage device may be a power battery such as a lithium battery or a sodium battery. For example, the energy storage device is a lithium battery, the lithium battery may also include a positive electrode, a negative electrode, a separator, and an electrolyte. The separator is arranged between the positive electrode and the negative electrode. The positive electrode, the negative electrode, and the separator are assembled to form a cell. The electrolyte is used to fill the cell and infiltrate the positive electrode and the negative electrode. The negative electrode may be the negative electrode provided in the second aspect, and the active material layer of the negative electrode includes the negative active material provided in the first aspect.

The technical solutions of the embodiments of the disclosure will be further described below in combination with more specific embodiments.

### Embodiment 1

This embodiment provides a negative electrode, which includes a current collector and an active material layer disposed on the surface of the current collector. The active material layer includes a negative active material. The negative active material includes graphite with micropores, mesopores, and macropores. The pore volume (*V*1) of the micropores in the negative active material is 0.00001165 cm³/g, the pore volume (*V*2) of the mesopores in the negative active material is 0.00233 cm³/g, the pore volume (*V*3) of the macropores in the negative active material is 0.00272 cm³/g, *Dv90* of the negative active material is 22.1 µm, *Dv*99 of the negative active material is 34.2 µm, and the specific surface area of the negative active material is 1.67 m²/g. The ratio of the quantity of the negative active material in the first particle size range to the total quantity of the negative active material is x, where x is 0.65. The ratio of the quantity of the negative active material in the second particle size range to the total quantity of the negative active material is *y*, where *y* is 0.31. The ratio of the quantity of the negative active material in the third particle size range to the total quantity of the negative active material is z, where z is 0.004. The first particle size range is a range with a lower limit greater than or equal to 0.6 µm and with an upper limit less than or equal to 2.5 µm. The second particle size range is a range with a lower limit greater than 2.5 µm and with an upper limit less than 7.5 µm. The third particle size range is a range with a lower limit greater than or equal to 7.5 µm and with an upper limit less than or equal to 30 µm.

The preparation method of the negative electrode includes the following. 10 wt% of an aqueous carboxymethyl cellulose binder is dissolved into water, 10 wt% of a carbon black conductive agent and 80 wt% of negative active material particles with the above pore volumes, particle size distributions, and specific surface area are added, to form a uniformly dispersed slurry. The slurry is uniformly coated on the surface of the copper foil current collector, and then transferred to a vacuum drying oven for drying to obtain the negative electrode. The negative electrode is then roll-pressed and punched to obtain a disc-shaped negative electrode for preparing a coin cell.

### Embodiment 2

Embodiment 2 is the same as embodiment 1 except that the pore volumes, particle size distributions, and specific surface area of the negative active material in embodiment 2 are different from that in embodiment 1. See Table 1 for details.

### Embodiment 3

Embodiment 3 is the same as embodiment 1 except that the pore volumes, particle size distributions, and specific surface area of the negative active material in embodiment 3 are different from that in embodiment 1. See Table 1 for details.

### Embodiment 4

Embodiment 4 is the same as embodiment 1 except that the pore volumes, particle size distributions, and specific surface area of the negative active material in embodiment 4 are different from that in embodiment 1. See Table 1 for details.

### Embodiment 5

Embodiment 5 is the same as embodiment 1 except that the pore volumes, particle size distributions, and specific surface area of the negative active material in embodiment 5 are different from that in embodiment 1. See Table 1 for details.

### Embodiment 6

Embodiment 6 is the same as embodiment 1 except that the pore volumes, particle size distributions, and specific surface area of the negative active material in embodiment 6 are different from that in embodiment 1. See Table 1 for details.

### Embodiment 7

Embodiment 7 is the same as embodiment 1 except that the pore volumes, particle size distributions, and specific surface area of the negative active material in embodiment 7 are different from that in embodiment 1. See Table 1 for details.

### Embodiment 8

Embodiment 8 is the same as embodiment 1 except that the pore volumes, particle size distributions, and specific surface area of the negative active material in embodiment 8 are different from that in embodiment 1. See Table 1 for details.

### Ninth embodiment

Embodiment 9 is the same as embodiment 1 except that the pore volumes, particle size distributions, and specific surface area of the negative active material in embodiment 9 are different from that in embodiment 1. See Table 1 for details.

### Embodiment 10

Embodiment 10 is the same as embodiment 1 except that the pore volumes, particle size distributions, and specific surface area of the negative active material in embodiment 10 are different from that in embodiment 1. See Table 1 for details.

### Comparative embodiment 1

Comparative embodiment 1 is the same as embodiment 1 except that the pore volumes, particle size distributions, and specific surface area of the negative active material in comparative embodiment 1 are different from that in embodiment 1. See Table 1 for details.

### Comparative embodiment 2

Comparative embodiment 2 is the same as embodiment 1 except that the pore volumes, particle size distributions, and specific surface area of the negative active material in comparative embodiment 2 are different from that in embodiment 1. See Table 1 for details.

### Comparative embodiment 3

Comparative embodiment 3 is the same as embodiment 1 except that the pore volumes, particle size distributions, and specific surface area of the negative active material in comparative embodiment 3 are different from that in embodiment 1. See Table 1 for details.

### Comparative embodiment 4

Comparative embodiment 4 is the same as embodiment 1 except that the pore volumes, particle size distributions, and specific surface area of the negative active material in comparative embodiment 4 are different from that in embodiment 1. See Table 1 for details.

Below is an explanation of the tests conducted on the pore volumes, the particle size distributions, and the specific surface area of the negative active material in the aforementioned embodiments and comparative embodiments.
(1) Using a laser diffraction particle size distribution measuring instrument (Malvern Mastersizer 3000), the particle size distributions and the specific surface area are measured according to the particle size distributions laser diffraction method GB/T19077-2016, to obtain Dv99 and Dv90.
(2) Pore volume measurement: Measured using the automated specific surface area and porosity analyzer Micromeritics TriStar 3030 from the United States. The specific testing method is as follows. Take 2 g samples of the negative active material in the aforementioned embodiments and comparative embodiments, and subject them to degassing at 200°C for 12 hours. Load the degassed samples into the sample tube of the analyzer to measure pore volume and specific surface area.

The test results are illustrated in Table 1 below.

**Table 1. Microscopic structure test results of the negative active material in embodiments 1 to 10 and Comparative embodiments 1 to 4**

| | *V*1 (cm³/g) | *V*2 (cm³/g) | *V*3 (cm³/g) | *Dv*90 (µm) | *Dv*99 (µm) | Specific Surface Area (m²/g) | *x* | *y* | *z* |
|---|---|---|---|---|---|---|---|---|---|
| Embodiment 1 | 0.00001165 | 0.00233 | 0.00272 | 22.1 | 34.2 | 1.67 | 0.65 | 0.31 | 0.04 |
| Embodiment 2 | 0.0000147 | 0.00245 | 0.00261 | 22.5 | 34.4 | 1.73 | 0.62 | 0.33 | 0.05 |
| Embodiment 3 | 0.00002328 | 0.00194 | 0.00352 | 21.6 | 33.5 | 1.78 | 0.66 | 0.28 | 0.06 |
| Embodiment 4 | 0.0000364 | 0.00182 | 0.00374 | 21.4 | 33.2 | 1.83 | 0.61 | 0.34 | 0.05 |
| Embodiment 5 | 0.0000220 | 0.00275 | 0.00293 | 23.4 | 34.1 | 1.77 | 0.72 | 0.24 | 0.04 |
| Embodiment 6 | 0.0000191 | 0.00174 | 0.00327 | 20.1 | 35.9 | 1.75 | 0.74 | 0.21 | 0.05 |
| Embodiment 7 | 0.0000365 | 0.00183 | 0.00375 | 21.5 | 33.6 | 1.84 | 0.55 | 0.36 | 0.09 |
| Embodiment 8 | 0.0000352 | 0.00185 | 0.00367 | 21.7 | 33.8 | 1.82 | 0.79 | 0.18 | 0.03 |
| Embodiment 9 | 0.0000341 | 0.00172 | 0.00351 | 22.3 | 33.9 | 1.82 | 0.71 | 0.21 | 0.08 |
| embodiment 10 | 0.0000257 | 0.00189 | 0.00341 | 22.7 | 34.1 | 1.79 | 0.58 | 0.39 | 0.03 |
| Comparative embodiment 1 | 0.0001356 | 0.00452 | 0.00192 | 22.3 | 36.2 | 1.52 | 0.52 | 0.41 | 0.07 |
| Comparative embodiment 2 | 0.00000226 | 0.00113 | 0.00451 | 22.7 | 36.6 | 1.58 | 0.55 | 0.43 | 0.02 |
| Comparative embodiment 3 | 0.0002096 | 0.00524 | 0.00127 | 20.4 | 32.5 | 2.23 | 0.67 | 0.24 | 0.09 |
| Comparative embodiment 4 | 0.0002098 | 0.00521 | 0.00126 | 20.3 | 32.4 | 2.25 | 0.62 | 0.36 | 0.02 |

The performance test of the negative active material is described below.

Preparation of the positive electrode: Lithium iron phosphate, binder PVDF, and conductive agent SP are dispersed in solvent NMP at a mass ratio of 95.5:2:2.5 and mixed uniformly to obtain positive electrode slurry. The positive electrode slurry is coated on the aluminum foil of the positive electrode current collector and dried. The coating weight of the positive active material layer is 254 mg/1540.25 mm². After rolling, slitting, and cutting, the positive electrode is obtained.

Preparation of the electrolyte: Ethylene carbonate (EC), ethyl methyl carbonate (EMC), and diethyl carbonate (DEC) are mixed at a volume ratio of 1:1:1 to obtain a mixed organic solvent. Then, lithium salt LiPF6, which has been fully dried, is dissolved in the mixed organic solvent at a concentration of 1 mol/L to prepare the electrolyte.

Assembly of the coin cell: A polyethylene separator with a thickness of 12 µm is used as the separator. The electrode, the separator, and the positive electrode in the aforementioned embodiments and comparative embodiments are stacked in order, with the separator positioned between the positive electrode and the electrode. The above electrolyte is added to assemble the cell. The cell is subjected to cycle performance tests.

The cycle performance testing process includes the following: At 25°C, the cell prepared with the negative electrode in the aforementioned embodiments and comparative embodiments is charged at a constant power of 1 P to 3.65 V, and then discharged at a constant power of 1 P to 2.5 V. The discharge capacity is recorded as the initial capacity. This process is cycled until the capacity of the lithium ion cell is less than 80% of the initial capacity, and the number of cycles is recorded. The test results are illustrated in Table 2 and FIG. 1 below.

**Table 2: Results of pore volume ratios and cycle performance tests in the embodiments and comparative embodiments**

| | *V*1/*V*2 | *V*2/(*V*2 + *V*3) | (*Dv*99-*Dv*90)/*Dv*99 | [*V*2/(*V*2+*V*3)]/[ (*Dv*99-*Dv*90)/*Dv*99] | x/z | *y*/*z* | Specific Capacity (mAh/g) | Cycle Retention Rate at 600 Cycles (%) |
|---|---|---|---|---|---|---|---|---|
| Embodiment 1 | 0.5% | 46.1% | 0.3538 | 1.30 | 16.3 | 7.8 | 348.4 | 99.9 |
| Embodiment 2 | 0.6% | 48.4% | 0.3459 | 1.40 | 12.4 | 6.6 | 347.8 | 99.7 |
| Embodiment 3 | 1.2% | 35.5% | 0.3552 | 1.00 | 11.0 | 4.7 | 346.5 | 99.5 |
| Embodiment 4 | 2.0% | 32.7% | 0.3554 | 0.92 | 12.2 | 6.8 | 349.7 | 99.3 |
| Embodiment 5 | 0.8% | 48.4% | 0.3138 | 1.54 | 18.0 | 6.0 | 345.2 | 99.2 |
| Embodiment 6 | 1.1% | 34.7% | 0.4401 | 0.79 | 14.8 | 4.2 | 346.1 | 99.0 |
| Embodiment 7 | 2.0% | 32.8% | 0.3601 | 0.91 | 6.1 | 4.0 | 345.1 | 98.4 |
| Embodiment 8 | 1.9% | 33.2% | 0.3580 | 0.94 | 26.3 | 6.0 | 345.7 | 98.3 |
| Embodiment 9 | 2.0% | 32.9% | 0.3422 | 0.96 | 8.9 | 2.6 | 346.5 | 98.5 |
| Embodiment 10 | 1.4% | 35.7% | 0.3343 | 1.07 | 19.3 | 13.0 | 345.3 | 98.2 |
| Comparative embodiment 1 | 3.0% | 70.2% | 0.3840 | 1.83 | 7.4 | 5.9 | 347.3 | 97.9 |
| Comparative embodiment 2 | 0.2% | 20.0% | 0.3798 | 0.53 | 27.5 | 21.5 | 345.6 | 97.3 |
| Comparative embodiment 3 | 4.0% | 80.5% | 0.3723 | 2.16 | 7.4 | 2.7 | 346.7 | 96.7 |
| Comparative embodiment 4 | 4.0% | 80.5% | 0.3735 | 2.16 | 31.0 | 18.0 | 346.7 | 96.3 |

Through the comparison of embodiments 1 to 10 and comparative embodiments 1 to 4, it can be seen that when the pore volumes of the micropores, the mesopores, and the macropores in the negative active material satisfy 0.5% ≤ *V*1 / *V2* ≤ 2% and 30% ≤ *V2* / (*V*2 + *V*3) ≤ 50%, the specific capacity can be maintained at a high level of over 345 mAh/g, significantly improving the cycle performance of the energy storage device. The cycle performance of the energy storage device in the embodiments of the disclosure can be improved to over 98%, even reaching above 99%, which meets the requirement of prolonging the service life of the energy storage device. Particularly, as illustrated in the results of the cycle performance testing in embodiment 1 and comparative embodiment 1 in FIG. 1, the negative active material in the embodiments of the disclosure can significantly enhance the cycle performance of the energy storage device.

In comparative embodiments 1, 3, and 4, *V*1 / *V*2 exceeds 2% and *V2* / (*V*2 + *V*3) exceeds 50%, the proportions of the mesopores and the micropores in the total negative active material are too high, and an increase in specific surface area is significant. This leads to excessive lithium source consumption during the formation of the SEI film on the negative electrode, resulting in low ICE and capacity cycle retention rate of the energy storage device. In comparative embodiment 2, *V*1 / *V*2 is less than 0.5% and *V2* / (*V*2 + *V*3) is less than 30%, the proportion of the macropores in the negative active material is too high, providing insufficient lithium-ion channels, leading to insufficient kinetics, which still affects the cycle performance of the energy storage device.

Through further comparison of embodiment 1 and embodiment 2, as well as embodiment 3 and embodiment 4, it can be seen that when the pore volumes of the micropores, the mesopores, and the macropores in the negative active material are further controlled to satisfy 0.5% ≤ *V*1 / *V*2 ≤ 0.6% and 46% ≤ *V*2 / (*V*2 + *V*3) ≤ 48%, and the relationship between pore volume and particle size satisfies that the ratio of *V*2 /( *V*2 + *V*3) to (*Dv*99 - *Dv*90) / *Dv*99 ranges from 1.3 to 1.4, the cycle performance of the energy storage device can be further improved to over 99.7% while maintaining a high capacity level. This indicates that the negative active material with the aforementioned pore volumes and particle size distributions has superior capacity levels and cycle performance.

Through further comparison of embodiments 1 to 4, embodiment 5, and embodiment 6, it can be seen that although the pore volumes and particle size distributions of the negative active material in embodiment 5 and embodiment 6 may also satisfy 0.5% ≤ *V*1 / *V*2 ≤ 2% and 30% ≤ *V*2 / (*V*2 + *V*3) ≤ 50%, the ratio of *V*2 / (*V*2 + *V*3) to (*Dv*99 - *Dv*90) / *Dv*99 has exceeded the range of 0.8 to 1.5. Although embodiment 5 and embodiment 6 also exhibit the cycle performance of over 99% for 600 cycles, embodiment 1 exhibits better cycle performance of over 99.7%. It can be seen that when the ratio of *V2* / *(V2* + *V*3) to (*Dv*99 - *Dv*90) / *Dv*99 further satisfies a range of 0.8 to 1.5, the cycle retention rate can be as high as 99.7% or more, while maintaining a high specific capacity level.

Through further comparison of embodiments 1 to 6, as well as embodiments 7 to 10, it can be seen that although the pore volumes and particle size distributions of the negative active material in embodiments 7 to 10 can also satisfy 0.5% ≤ *V*1 / *V*2 ≤ 2% and 30% ≤ *V2* / (*V*2 + *V*3) ≤ 50%, *x* / z has exceeded a range of 8.4 to 25.0 ory / z has exceeded a range of 2.8 to 11.7. Although embodiments 7 to 10 also exhibit cycle performance of over 98%, embodiments 1 to 8 exhibit better cycle performance of over 99%. It can be seen that when x / z ranges from 8.4 to 25.0 and *y* / *z* ranges from 2.8 to 11.7, it is beneficial to achieving a cycle retention rate of over 99% while maintaining a high specific capacity level.

Through further comparison of embodiment 1 and embodiment 7, it can be seen that when x / z is less than 8.4, the proportion of large particles in the negative material is too high, resulting in a large particle size of the negative material, insufficient kinetics of the negative material, leading to lithium plating of the cell, thus deteriorating the cycle performance of the cell. Through comparison of embodiment 1 and embodiment 8, it can be seen that when *x* / *z* is greater than 25.0, the proportion of fine powder in the negative material is too high, increasing the side reactions of the cell and deteriorating the cycle performance of the cell. Through comparison of embodiment 1 and embodiment 9, it can be seen that when *y* / *z* is less than 2.8, the particle size distributions of the negative material are mismatched, leading to a too high proportion of large particles in the negative material, insufficient kinetics of the negative material, leading to lithium plating of the cell, thus deteriorating the cycle performance of the cell. Through comparison of embodiment 1 and embodiment 10, it can be seen that when *y* / *z* is greater than 11.7, the particle size distributions of the negative material are mismatched, leading to a high proportion of small particles in the negative material, a high specific surface area of the negative material, resulting in excessive lithium consumption and increased side reactions, thereby deteriorating the cycle performance of the cell.

## Claims

1. A negative active material, comprising a porous structure having micropores, mesopores, and macropores, wherein a pore volume of the negative active material satisfies: 0.5% ≤ *V*1 / *V*2 ≤ 2% and 30% ≤ *V*2 / (*V*2 + *V*3) ≤ 50%, wherein *V*1 represents a pore volume of the micropores in the negative active material, *V*2 represents a pore volume of the mesopores in the negative active material, and *V*3 represents a pore volume of the macropores in the negative active material.

2. The negative active material of claim 1, wherein a ratio of *V*2 / (*V*2 + *V*3) to (Dv99 - *Dv90)* / *Dv*99 ranges from 0.8 to 1.5, wherein Dv99 represents a particle size corresponding to a cumulative particle size distribution of the negative active material that reaches 99%, and Dv90 represents a particle size corresponding to a cumulative particle size distribution of the negative active material that reaches 90%.

3. The negative active material of claim 2, wherein 0.34 ≤ (*Dv*99 - *Dv*90) / *Dv*99 ≤ 0.36.

4. The negative active material of claim 2 or 3, wherein 20 µm ≤ *Dv90* ≤ 30 µm, and 30 µm ≤ *Dv*99 ≤ 40 µm.

5. The negative active material of any one of claims 1 to 4, wherein 0.5% ≤ *V*1 / *V*2 ≤ 0.6%.

6. The negative active material of any one of claims 1 to 5, wherein 46% ≤ *V*2 / (*V*2 + *V*3) ≤ 48%.

7. The negative active material of any one of claims 1 to 6, wherein 0.00001 cm³/g < *V*1 ≤ 0.00004 cm³/g, 0.001 cm³/g ≤ *V2* ≤ 0.0025 cm³/g, and 0.0026 cm³/g ≤ *V3* ≤ 0.004 cm³/g.

8. The negative active material of any one of claims 1 to 7, wherein a ratio of a quantity of the negative active material in a first particle size range to a total quantity of the negative active material is x, a ratio of a quantity of the negative active material in a second particle size range to the total quantity of the negative active material is *y*, a ratio of a quantity of the negative active material in a third particle size range to the total quantity of the negative active material is z, particle sizes of the negative active material satisfy: 8.4 ≤ *x* / *z* ≤ 25.0 and 2.8 ≤ *y* / *z* ≤ 11.7; the first particle size range is a range with a lower limit greater than or equal to 0.6 µm and with an upper limit less than or equal to 2.5 µm; the second particle size range is a range with a lower limit greater than 2.5 µm and with an upper limit less than 7.5 µm; and the third particle size range is a range with a lower limit greater than or equal to 7.5 µm and with an upper limit less than or equal to 30 µm.

9. The negative active material of claim 8, wherein 0.59 ≤ *x* ≤ 0.75, 0.20 ≤ *y* ≤ 0.35, and 0.03 ≤ *z* ≤ 0.07.

10. The negative active material of any one of claims 1 to 7, wherein a specific surface area of the negative active material ranges from 1.1 m²/g to 2.0 m²/g.

11. A negative electrode, comprising a current collector and an active material layer disposed on at least one surface of the current collector, wherein the active material layer comprises the negative active material of any one of claims 1 to 10.

12. An energy storage device, comprising the negative active material of any one of claims 1 to 10.
